# EUROPÄISCHE PATENTANMELDUNG

(11) **EP 3 604 232 A1**
(43) Veröffentlichungstag der Anmeldung: **05.02.2020**
(21) Anmeldenummer: 19189721.4
(22) Anmeldetag: 02.08.2019
(51) Int. Cl.: C02F 1/28, C02F 3/32

(54) **VERWENDUNG VON KOHLENSTOFFHALTIGEN BIODEGRADABLEN POLYMEREN FÜR DIE KOHLENSTOFF UND NÄHRSTOFFVERSORGUNG VON WASSERPFLANZEN UND MIKROORGANISMEN**

(30) Priorität: 02.08.2018 DE 102018118789
(71) Anmelder: Martin, Ulrich, 31319 Sehnde (DE)
(72) Erfinder: Martin, Ulrich, 31319 Sehnde (DE)
(74) Vertreter: Gramm, Lins & Partner Patent- und Rechtsanwälte PartGmbB

(57) **Zusammenfassung**

Die Erfindung betrifft ein Verfahren zur Versorgung von Wasserpflanzen und im Wasser vorhandener Mikroorganismen, insbesondere solche zur biologischen Reinigung des Wassers, in einem stehenden Gewässer, mit Nährstoffen, insbesondere mit kohlenstoffhaltigen Verbindungen, wie Kohlendioxid und gegebenenfalls Makro- und Mikronährstoffen, wobei biologisch abbaubare, wasserunlösliche organische Kohlenstoffsubstrate als Nährstoffdepot bereitgestellt werden. Eine mikrobielle Umsetzung der organischen Kohlenstoffsubstrate zum Beispiel in Form von biologisch abbaubaren Kohlenstoffpolymeren führt zur Freisetzung von Kohlendioxid, das von Unterwasserpflanzen aufgenommen werden kann und zur Freisetzung von weiteren Nährstoffen, die Stoffwechsel und Wachstum von Wasserpflanzen und Mikroorganismen fördern. In einem weiteren Aspekt betrifft die Erfindung die Verwendung von biologisch abbaubaren, wasserunlöslichen organischen Kohlenstoffsubstraten als Nährstoffdepots zur Versorgung von Mikroorganismen in Biofiltern insbesondere zur Denitrifizierung und Phosphatbindung/-elimination, in stehenden Gewässern, insbesondere ausgewählt aus Schwimmteichen, Badeteichen, Naturpools und/oder Aquarien. Schließlich wird ein mikrobieller Bioreaktor zur Generierung von kohlenstoffhaltigen Verbindungen, insbesondere Kohlenstoffdioxid und gegebenenfalls natürlicher Freisetzung weiterer Makro- und Mikronährstoffe für die Versorgung von Unterwasserpflanzen und gegebenenfalls als Nährstoff für Mikroorganismen zur biologischen Reinigung von Wasser enthaltend biologisch abbaubare, wasserunlösliche organische Kohlenstoffsubstrate als Nährstoffdepots bereitgestellt.

## Beschreibung

Die Erfindung betrifft ein Verfahren zur Versorgung von Wasserpflanzen und im Wasser vorhandener Mikroorganismen, insbesondere solche zur biologischen Reinigung des Wassers, in einem stehenden Gewässer, mit Nährstoffen, insbesondere mit kohlenstoffhaltigen Verbindungen, wie Kohlendioxid und gegebenenfalls Makro- und Mikronährstoffen, wobei biologisch abbaubare organische Kohlenstoffsubstrate als Nährstoffdepot bereitgestellt werden. Eine mikrobielle Umsetzung der organischen Kohlenstoffsubstrate, zum Beispiel in Form von biologisch abbaubaren Kohlenstoffpolymeren, führt zur Freisetzung von Kohlendioxid, das von Wasserpflanzen aufgenommen werden kann und abhängig von der Ausführung zur Freisetzung von weiteren Nährstoffen, die Stoffwechsel und Wachstum von Wasserpflanzen und Mikroorganismen fördern. In einem weiteren Aspekt betrifft die Erfindung die Verwendung von biologisch abbaubaren organischen Kohlenstoffsubstraten als Nährstoffdepots zur Versorgung von Mikroorganismen in Biofiltern insbesondere zur Denitrifizierung und/oder zur Phosphatbindung bzw. Phosphatreduktion/-elimination in stehenden Gewässern, insbesondere ausgewählt aus Schwimmteichen, Badeteichen und/oder Naturpools, aber auch Aquarien. Schließlich wird ein mikrobieller Bioreaktor zur Generierung von kohlenstoffhaltigen Verbindungen, insbesondere Kohlenstoffdioxid und gegebenenfalls natürlicher Freisetzung weiterer Makro- und Mikronährstoffe, für die Versorgung von Unterwasserpflanzen und gegebenenfalls als Nährstoff für Mikroorganismen zur biologischen Reinigung von Wasser enthaltend biologisch abbaubare organische Kohlenstoffsubstrate als Nährstoffdepots bereitgestellt.

### Stand der Technik

Schwimmteiche, Badeteiche und Naturpools sind wie andere künstliche Teichanlagen (z.B. die Mehrzahl der Gartenteiche) geschlossene Anlagen ohne Zufluss oder Abfluss von außen oder Kontakt mit dem Grundwasser, sind aber im Gegensatz zu normalen Gartenteichen für die Nutzung als Schwimm- und Badegewässer konzipiert.

Im Gegensatz zu gechlorten Schwimmbädern und Pools beruhen Schwimmteiche, Badeteiche und Naturpools auf dem Prinzip der biologischen Klärung über Mikroorganismen und eingesetzte Sumpf- und Wasserpflanzen. Es gibt verschiedene Typen solcher Anlagen, die sich insbesondere durch den unterschiedlichen Einsatz technischer Pump-und Filtersysteme unterscheiden. Wasserverlust durch Verdunstung wird in solchen Anlagen über Regenwasser oder gezielte Zuleitung aus Leitungswasser oder anderen Quellen ausgeglichen.

Das Wachstum von Sumpf- und Wasserpflanzen und von, für die biologische Klärfunktion notwendigen, Mikroorganismen in Schwimmteichen, Badeteichen und Naturpools ist nur bei einem ausreichenden Gehalt des Wassers bzw. Boden- oder Filtersubstrates an allen notwendigen Makro- und Mikronährstoffen gewährleistet. Bei Unterwasserpflanzen und Mikroorganismen schließt dies die Verfügbarkeit von verwertbarem Kohlenstoff ein. Wenn einer dieser Nährstoffe gar nicht oder in zu niedriger Konzentration, bzw. nicht in verwertbarer Form vorhanden ist, können die eingesetzten Pflanzen nicht wachsen, und sind nicht in der Lage ausreichend überschüssige Nährstoffe, insbesondere Phosphat, zu binden und damit übermäßiges Algenwachstum zu verhindern. Bei zu hohem Gehalt an Makronährstoffen, insbesondere Phosphat, tritt üblicherweise ein übermäßiges unerwünschtes Wachstum an Schweb- und Fadenalgen sowie Biofilmen auf.

In künstlich angelegten Gewässern, insbesondere in stehenden Gewässern (Stillgewässer) wie Schwimmteichen, Badeteichen und Naturpools, ist in den meisten Fällen ein fehlendes oder mangelhaftes Wachstum von Unterwasserpflanzen zu beobachten. Gleichzeitig tritt häufig verstärktes Algenwachstum auf.

An Land wachsende Pflanzen oder Sumpfpflanzen, die über Blätter verfügen, die an der Luft ausgebildet werden, werden normalerweise trotz der niedrigen atmosphärischen Kohlenstoffdioxidkonzentration von circa 0,03% im ausreichenden Maße mit Kohlendioxid versorgt. Dieses ist aufgrund der hohen Diffusionsgeschwindigkeiten in der Gasphase möglich.

Im Gegensatz dazu ist die Kohlenstoffdioxidversorgung für Unterwasserpflanzen wegen der sehr niedrigen Diffusionsgeschwindigkeit von im Wasser gelösten Gasen sehr viel schwerer zu realisieren und häufig wachstumslimitierend. Für ein ausreichendes Wachstum von Unterwasserpflanzen in Stillgewässern sind Kohlendioxidkonzentrationen von mindestens 10 bis 15 mg/l notwendig. Ein ausreichendes Pflanzenwachstum in natürlichen oder künstlichen Stillgewässern ist nur dort zu beobachten, wo deutlich erhöhte Kohlendioxidkonzentrationen vorliegen, insbesondere in Gewässern mit erheblichen Mengen an organischen Sedimenten, aus denen mikrobiologisch produziertes Kohlendioxid freigesetzt wird.

Wie ausgeführt, sind Kohlendioxidkonzentrationen von mindestens 10 bis 15 mg/l in Stillgewässern notwendig, um ein ausreichendes Unterwasserpflanzenwachstum zu gewährleisten. Tatsächlich liegt der Gehalt an gelösten Kohlendioxid in Stillgewässern, insbesondere künstlichen stehenden Gewässern wie Schwimmteichen, Naturpools oder Badeteichen, in der Regel deutlich unter 5 mg/l. Die bisher bekannten Verfahren zur Zufuhr von kohlenstoffdioxidhaltigen Verbindungen zur Förderung des Wachstums von submersen Wasserpflanzen, das heißt Unterwasserpflanzen, in stehenden Gewässern, insbesondere künstlichen Gewässern wie Schwimmteichen, Badeteichen oder Naturpools, sind derzeit nicht ausreichend. Dies liegt unter anderem darin begründet, das anders als in natürlichen Gewässern keine substantielle Ablagerung von kohlenstoffhaltigen Sedimenten auf dem Bodengrund erfolgt, die zu einer nennenswerten mikrobiellen Freisetzung von Kohlendioxid in das darüber liegende Wasser führen könnte. Saisonal abgelagerte organische Sedimente werden üblicherweise bei der jährlichen Schwimmteichpflege mit der vorhandenen Schwimmteichtechnik abgesaugt, um unter anderem überschüssige Nährstoffe, insbesondere Phosphate, die bekannterweise zu einem verstärkten Algenwachstum zu führen, aus dem biologischen Kreislauf zu entfernen.

Bei künstlichen Stillgewässern erfolgt darüber hinaus kein Zufluss von kohlendioxidhaltigen Grundwässern.

Kohlenstoffmangel ist daher ein entscheidender und begrenzender Faktor für das Wachstum von Unterwasserpflanzen in stillen Gewässern, wie künstlichen Gewässern einschließlich Schwimmteichen, Naturpools und Badeteichen.

Es werden im Stand der Technik verschiedene Anlagen beschrieben, zum Beispiel in der EP 0928776 A2, bei denen verschiedene technische Pump- und Filtersysteme eingesetzt werden, um durch erhöhte Kohlendioxidzufuhr ein vermindertes Algenwachstum zu erzielen, damit eine bessere Kohlenstoffversorgung von submersen Pflanzen ermöglicht werden kann.

Allerdings haben Untersuchungen ergeben, dass das in der EP 0928776 A2 dargestellte Verfahren und das Einblasen kohlendioxidangereicherter Bodenluft unter Verwendung handelsüblicher Vorrichtungen zur Mischung von kohlendioxidangereicherter Luft mit dem Schwimmteichwasser nicht ausreichen, um eine wachstumsfördernde Kohlendioxidkonzentration des Wassers insbesondere im Tiefwasserbereich zu erzielen.

Andere Maßnahmen zeigen ebenfalls nur begrenzte Effekte auf das Wachstum von submersen Wasserpflanzen. Eine Erhöhung der Carbonathärte, insbesondere durch Zugabe von Kaliumhydrogencarbonat, führt zwar zu einer Bereitstellung von Hydrogencarbonationen, die von bestimmten Wasserpflanzen des Elodea-Typs als Kohlenstoffquelle genutzt werden können. Allerdings ist das Wachstum bei ausschließlicher Verfügbarkeit von Hydrogencarbonationen in leicht basischem Wasser aufgrund des zusätzlichen Energiebedarfs für den Export von Protonen sehr mäßig. Keinesfalls führt dies zu einem vergleichbaren Pflanzenwachstum, wie er durch ausreichende Konzentration an gelöstem Kohlenstoff erzielt werden kann.

Als alternative wasserlösliche Kohlenstoffquelle wird in der Praxis desweiteren Saccharose eingesetzt. Saccharose wird ansonsten auch in Nährmedien für pflanzliche *in vitro* Zellkulturen verwendet. Allerdings wachsen Pflanzen in pflanzlichen Zellkulturen anders als Wasserpflanzen in Gewässern, unter sterilen Bedingungen. Saccharose ist im Gegensatz zu Kohlendioxid sehr energiehaltig und wird daher bei Zugabe ins Wasser von Schwimmteichen sehr schnell von Mikroorganismen, insbesondere Bakterien, verstoffwechselt und steht damit den Unterwasserpflanzen nicht mehr zur Verfügung. Stattdessen werden das Bakterienwachstum im freien Wasser und die Bildung unerwünschter Biofilme im Schwimmbereich verstärkt.

Die DE 10 2016 102 956 A1 beschreibt Kohlenstoffdünger für Wasserpflanzen. Dabei werden geformte Körper zur Verwendung als Kohlenstoffdünger für Wasserpflanzen bereitgestellt, umfassend eine biologisch abbaubare Polymermatrix und eine biologisch abbaubare Kostenstoffquelle, wobei die biologisch abbaubare Polymermatrix und die Kohlenstoffquelle unterschiedliche Verhältnisse von Kohlenstoff zu Sauerstoff aufzeigen, nämlich, wobei die Kohlenstoffquelle Kohlenstoff und Sauerstoff in einem C:O-Verhältnis von 1,4 oder weniger enthält und wobei die Polymermatrix Kohlenstoff und Sauerstoff in einem C:O-Verhältnis von über 1,4 enthält.

Diese dort beschriebenen Materialien, wie Polycaprolacton als biologisch abbaubare Polymermatrix und Glucose stellen allerdings teure Ausgangsmaterialien mit einem aufwendigen Herstellungsprozess dar.

Neben Kohlenstoff sind in künstlichen stehenden Gewässern, wie Schwimmteichen, Naturpools oder Badeteichen, aber auch in Aquarien, häufig auch weitere lösliche anorganische Makro-und Mikronährstoffe limitierend für das Wachstum von Pflanzen und Mikroorganismen in Biofiltern. Diese können dem Gewässer nach dem Stand der Technik typischerweise als Einmal- oder Mehrfachgabe als Düngegranulat oder Düngelösung, auch in komplexierter Form, zugeführt werden.

### Beschreibung der Erfindung

Der Erfindung liegt daher die Aufgabe zugrunde, ein anwendungsfreundliches und kostengünstiges Verfahren und Vorrichtungen zur Versorgung von Wasserpflanzen und von, für die biologische Klärung, Denitrifizierung und/oder Phosphatbindung notwendigen, Mikroorganismen mit Kohlenstoff und in einer weiteren Anwendungsform, zusätzlichen Makronährstoffen wie Stickstoff, Calcium, Kalium, Magnesium und Schwefel, und Mikronährstoffen wie Bor, Chlor, Eisen, Mangan, Molybdän oder Zink, als Depot in einem stehenden Gewässer bereitzustellen. Bei dem stehenden Gewässer, auch als Stillgewässer bezeichnet, handelt es sich insbesondere um künstliche Gewässer wie Schwimmteiche, Badeteiche oder Naturpools, aber auch um Aquarien. Durch einen kontinuierlich fortschreitenden Abbau eines wasserunlöslichen organischen Kohlenstoffsubstrates, plaziert im Bodengrund, in Depots oder an der Einströmseite von Biofilter, soll insbesondere das Wachstum von Algen und Biofilmen außerhalb der Filteranlagen und des Bodensubstrates nicht gefördert werden. In einer weiteren Anwendungsform werden an der Substratoberfläche nicht nur Kohlenstoffverbindungen freigesetzt, sondern auch optional inkorporierter Mikro-und Makronährstoffen.

Erfindungsgemäß wird die Aufgabe durch ein Verfahren nach Anspruch 1 gelöst, erfindungsgemäße Vorrichtungen zur Durchführung des erfindungsgemäßen Verfahrens werden im Anspruch 9 beschrieben.

Erfindungsgemäß ist es möglich, die kontinuierliche Versorgung von Wasserpflanzen und von, für die biologische Filterung notwendigen, Mikroorganismen mit Kohlenstoff und weiteren Makro- und Mikronährstoffen des stehenden Gewässers zu optimieren und zu ergänzen.

Das heißt, in einem ersten Aspekt wird ein Verfahren zur Versorgung von Wasserpflanzen und im Wasser vorhandener Mikroorganismen, insbesondere solche zur biologischen Reinigung des Wassers, in einem stehenden Gewässer mit kohlenstoffhaltigen Verbindungen, wie Kohlendioxid, und gegebenenfalls weiteren Makro- und Mikronährstoffen bereitgestellt, wobei biologisch abbaubare, bei Wassertemperaturen bis mindestens 30°C wasserunlösliche organische Kohlenstoffsubstrate als Nährstoffdepot dienen.

In einer Ausführungsform handelt es sich bei dem biologisch abbaubaren, wasserunlöslichen organischen Kohlenstoffsubstrat um eines mit mindestens zwei Komponenten. Die erste Komponente ist eine Komponente einer schnell abbaubaren Kohlenstoffquelle. Bei der zweiten Komponente handelt es sich um eine, die eine langsam abbaubare Kohlenstoffquelle darstellt.

In einer Ausführungsform hiervon ist die schnell abbaubare Kohlenstoffquelle Stärke, die langsam abbaubare Kohlenstoffquelle Cellulose.

Vorteil dieser Kombination ist insbesondere, dass einerseits diese Stoffe in hoher Reinheit, nämlich im Wesentlichen frei von Phosphat bereitgestellt werden können und sie andererseits für einen niedrigen Preis zur Verfügung stehen, so dass kostengünstig die erfindungsgemäßen Nährstoffdepots auch für größere Stillgewässer wie Schwimmteiche oder Biopools bereitgestellt werden können.

Die Stärke ist dabei eine schnell abbaubare Kohlenstoffquelle, sie hat darüber hinaus den Vorteil, dass sie auch als "Kleber" und "Dichtmittel" verwendet werden kann, um einerseits das Eindringen von Mikroorganismen in das Innere der Pellets zu vermeiden und andererseits die Herstellung der Nährstoffdepots in Form von Pellets erlaubt.

Sowohl die Stärke als auch die Cellulose sind Substanzen, die in Wasser, wie es üblicherweise in Stillgewässern vorliegt, nämlich bei Wässern unter 50°C unlöslich sind.

Die Cellulose stellt die langsam abbaubare Kostenstoffquelle dar. Sie bildet gleichzeitig die strukturbildende Komponente.

Als Cellulose können auch komplexe, Cellulosehaltige, natürliche Substrate eingesetzt werden, z. B. in Form von Holzpellets, Hanffasern, Flachsfasern, Grasfasern oder Baumwollfasern.

In einer Ausführungsform ist dabei die schnell abbaubare Kohlenstoffquelle, welche gleichzeitig als Kleber und Dichtsubstanz wirkt, Stärke mit einem Molekulargewicht von ca. 1 - 10 x 10⁷ g/mol auf, das Kohlenstoff (C) zu Sauerstoff (O) Verhältnis C:O-Verhältnis ist z. B. ca. 1,2.

Die strukturbildende und gleichzeitig langsam abbaubare Kohlenstoffquelle ist in einer Ausführungsform Cellulose, bei der das Molekulargewicht in einem Bereich von 3 x 10⁵ bis 5 x 10⁶ g/mol liegt, der Kohlenstoff zu Sauerstoff-Gehalt (C:O-Verhältnis) liegt bei 1,2.

Zur Kohlenstoffversorgung von Unterwasserpflanzen und für die biologische Klärung, einschließlich Denitrifizierung und Phosphatbindung, notwendigen Mikroorganismen können verschiedene kohlenstoffhaltige Verbindungen eingesetzt werden, üblicherweise solche, die bei Wassertemperaturen bis mindestens 30°C nicht oder nur in vernachlässigbarem Umfang wasserlöslich sind. Hierzu zählen insbesondere Biopolymere oder mikrobiell abbaubare Fettsäuren/Wachse und/oder Polysaccharide. Alternativ können auch komplexe kohlenstoffhaltige Substrate wie Holzpellets eingesetzt werden.

In einem Aspekt betrifft das erfindungsgemäße Verfahren daher eines, bei dem die biologisch abbaubaren, wasserunlöslichen organischen Kohlenstoffsubstrate wasserunlösliche, biologisch abbaubare Kohlenstoffquellen sind, zum Beispiel in Form von Polymeren, insbesondere Biopolymere und/oder Fettsäuren/Wachse und/oder Polysaccharide.

Hierzu können verschiedene biologisch langsam abbaubare, organische Substrate eingesetzt werden, wie biologisch abbaubare Biopolymere, insbesondere Polyhydroxyalkanoat (PHA) und/oder Polyhydroxybuttersäure (PHB) und/oder Polybutylensuccinat (PBS) und/oder Polylactide (PLA) und/oder Polycaprolactone (PCL) und/oder nicht beziehungsweise sehr gering wasserlösliche aber ebenfalls biologisch abbaubare Fettsäuren/Wachse, insbesondere Stearin, und/oder nicht beziehungsweise sehr gering wasserlösliche Polysaccharide wie Stärkeprodukte zum Beispiel Sagoperlen, Cellulose- oder Holzprodukte, z.B. in Form von Holzpellets. Die verwendeten Substrate können optional mit Einschlüssen von zusätzlichen Makro- und Mikronährstoffen versehen werden, welche beim biologischen Abbau bedarfsgerecht freigesetzt werden.

Die verwendeten biologisch abbaubaren Biopolymere können gegebenenfalls mit in Aggregatform in die Substrate inkorporierten Makro- und Mikronährstoffen versehen werden und dienen den abbauenden Mikroorganismen und Wasserpflanzen in diesem Fall nicht nur als Quelle für Kohlenstoff, sondern auch als Quelle für weitere Nährstoffe.

Oben genannte Kohlenstoffsubstrate können in den Bodensubstratschichten des bepflanzten Tiefwasserbereiches und gegebenenfalls der Sumpf-/Flachwasserbereiche platziert werden. Bei Durchströmung der Bodensubstrate von Sumpf-/Flachwasserbereichen und Tiefwasserbereichen kann das Durchströmwasser über eine größtmögliche mikrobielle Freisetzung von Kohlendioxid aus den dort platzierten Biopolymeren, bevorzugt unter aeroben Verhältnissen mit Kohlendioxid, angereichert werden, bevor es nach Durchströmung der Bodensubstratschichten in den Wasserkörper des Tiefwasserbereiches gelangt, um dort das Wachstum der Unterwasserpflanzen zu verbessern. Der permanente Fluss des Wassers kann zum Beispiel durch eine stromsparende Pumpe, die zum Beispiel wenige Kubikmeter pro Stunde fördert, erzielt werden.

In einer Ausführungsform des Verfahrens werden dabei die Kohlenstoffsubstrate als Nährstoffdepot bei Anlage des Teiches direkt innerhalb des Bodensubstrates platziert. Dies ermöglicht, bei Verwendung geeigneter, langsam abbaubarer Substrate, eine Kohlenstoffversorgung in den ersten Jahren des Teichbetriebes, bis sich ausreichend natürlich im Teich gebildete, organische Sedimente im Bodensubstrat abgelagert haben.

In einer zweiten Ausführungsform werden die Kohlenstoffsubstrate als Nährstoffdepot in großvolumige, perforierte und bei Teichbetrieb durchspülte Depotrohre, z.B. großvolumige Drainagerohre, eingebracht, zum Beispiel eingespült. In diesem Fall kann verbrauchtes Substrat auch zu späteren Zeitpunkten extern nachgefüllt werden.

Optional können die Kohlenstoffsubstrate auch in einen Bioreaktor für die mikrobielle Umsetzung der Substrate plaziert werden, um das Durchströmwasser im Bioreaktor mit Kohlenstoff anzureichern. Dieses angereicherte Wasser kann dann ebenfalls über Leitungen durch den Bodengrund des mit Unterwasserpflanzen besiedelten Tiefwasserbereichs oder direkt in den Wasserkörper des Tiefwasserbereichs eingeleitet werden. Durch die Wasserunlöslichkeit der Kohlenstoffsubstrate, zum Beispiel wenn als Pellets, wie Sagokügelchen, im Bioreaktor eingesetzt, in diesem Reaktor und werden kaum oder gar nicht mit dem Durchströmwasser aus dem Bioreaktor ausgetragen. Dadurch kann ein erhöhtes mikrobielles Wachstum durch Bakterien, die Stärke als Nahrungsquelle nutzen, außerhalb des Bioreaktors verhindert werden. Des Weiteren hat zum Beispiel Stärke, zum Beispiel in Form von Sago oder Kartoffelstärke, nur einen vernachlässigbaren Gehalt an weiteren Makronährstoffen, insbesondere Phosphat, so dass kein unerwünschtes Algenwachstum gefördert wird. Insbesondere verhindert die Verwendung von Stärke und Cellulose durch die Abwesenheit des Phosphats, dass unerwünschtes Algenwachstum gefördert wird.

Unter dem Ausdruck Durchströmwasser wird vorliegend das Wasser verstanden, dass aus einem ersten Bereich des stehenden Gewässers in einen zweiten Bereich des stehenden Gewässers geleitet wird, zum Beispiel aus dem Sumpf- oder Flachwasserbereich durch das Bodensubstrat in den Tiefwasserbereich eines stehenden Gewässers, insbesondere eines Schwimmteiches, Badeteiches und/oder Naturpools. Bei den stehenden Gewässern handelt es sich insbesondere um eines, das einen ersten Bereich, einen Sumpf- oder Flachwasserbereich aufweist mit einer ersten Bodensubstratschicht am Grund hiervon und mindestens einem, wenigstens teilweise bepflanzten Tiefwasserbereich mit einer zweiten Bodensubstratschicht im Grund des Tiefwasserbereichs. In einer Ausführungsform weist dabei der Sumpf-/Flachwasserbereich eine Wassertiefe von maximal 30 cm auf, so dass eine Besiedlung mit emersen Pflanzen, also Wasserpflanzen welche Ihren Kohlenstoffbedarf primär über Blätter außerhalb des Wassers aus der Luft decken, möglich ist. Der Tiefwasserbereich ist tiefer als 30 cm, in der Regel jedoch nicht tiefer als 1,5 bis 2,5 Meter. Der Tiefwasserbereich kann sich in einer Ausführungsform in einen bepflanzten Tiefwasserbereich und einen nicht bepflanzten Tiefwasserbereich, üblicherweise einen Schwimmbereich, unterteilen. Die Unterteilung der einzelnen Bereiche, Sumpf- oder Flachwasserbereich zu Tiefwasserbereich oder der Tiefwasserbereich in einem bepflanzten Tiefwasserbereich und einem nicht-bepflanzten Tiefwasserbereich (Schwimmbereich), kann durch mindestens teilweise Trennung dieser Bereiche durch geeignete Barrieren erfolgen.

Auch wird unter dem Ausdruck Durchströmwasser das Wasser verstanden, welches innerhalb eines stehenden Gewässers, z.B. eines Schwimmteiches, Badeteiches, Naturpools oder Aquariums, über einen Biofilter geleitet wird.
Das erfindungsgemäße Verfahren und die erfindungsgemäße Verwendung sowie der erfindungsgemäße mikrobielle Bioreaktor erlaubt eine effiziente und zielgerichtete gegebenenfalls räumlich getrennte Zuführung der notwendigen kohlenstoffhaltigen Verbindungen, wie Kohlendioxid, und gegebenenfalls weiteren Makro- und Mikronährstoffen zur Förderung des Wachstums von Unterwasserpflanzen in den Tiefwasserbereichen und wie Stärke und Cellulose, und gegebenenfalls ebenfalls weiteren Makro- und Mikronährstoffen zur Versorgung der gewünschten Mikroorganismen im Bodengrund und in biologischen Filtern.

In einer weiteren Ausführungsform betrifft die vorliegende Anmeldung die Verwendung von biologisch abbaubaren, wasserunlöslichen organischen Kohlenstoffsubstraten als Nährstoffdepots zur Kohlenstoffversorgung von Mikroorganismen in Biofiltern, insbesondere zur Denitrifizierung und/oder Phosphatbindung, gegebenenfalls vorliegend in Aggregatform, oder in Form spezieller Filtersubstrate mit großer Oberfläche, und/oder versehen mit Makro- und Mikronährstoffen, insbesondere in Schwimmteichen, Badeteichen und/oder Naturpools, oder Aquarien. Bevorzugt sollten die beschriebenen kohlenstoffhaltigen Pellets hier an der Einströmseite des Biofilters vor dem eigentlichen Filtersubstrat platziert werden. So können Mikroorganismen die Aggregate / Pellets direkt als Biofilm besiedeln und freigesetzte Abbauprodukte oder losgelöste Partikel können im nachfolgenden Substrat direkt von den dortigen Biofiltern verwertet werden und gelangen nicht oder nur in sehr geringem Ausmaß in den Wasserkörper des Stillgewässers. Gegenüber löslichen Kohlenstoffquellen wie z.B. Saccharose haben die beschriebenen kohlenstoffhaltigen Aggregate bzw. Pellets daher den Vorteil, dass kein unerwünschter Biofilmbewuchs außerhalb des Filters gefördert wird. Darüber hinaus eignet sich die erfindungsgemäße Verwendung dieser Kohlenstoffsubstrate zur Versorgung von Wasserpflanzen mit kohlenstoffhaltigen Verbindungen, insbesondere Kohlenstoffdioxid.

In einer weiteren Ausführungsform können die Kohlenstoffquellen in den in Biopools oder Aquarien verwendeten mikrobiellen Substratfiltern unter anaeroben Bedingungen für einen optimierten mikrobiellen Stoffabbau und eine optimierte mikrobielle Denitrifizierung erwendet werden. Unter aeroben oder alternierend aeroben-anaeroben Bedingungen können die Kohlenstoffquellen für eine Phosphatbindung / - elimination eingesetzt werden. Die verwendeten biologisch abbaubaren Biopolymere, versehen mit in Aggregatform in die Substrate inkorporierten zusätzlichen Makro-und Mikronährstoffen, und gegebenenfalls bereitgestellt in Form von Filtermedien mit möglichst großer Oberfläche, dienen den Mikroorganismen in diesem Fall nicht nur als Wachstumsoberfläche, sondern zusätzlich als Quelle für Kohlenstoff und weitere Nährstoffe, und ermöglichen eine effizientere Denitrifizierung des Teichwassers sowie eine effiziente Phosphatelimination.

In einer weiteren Ausführungsform wird ein mikrobieller Bioreaktor mit einer Kohlenstoffquelle bereitgestellt. Dieser Reaktor kann organische Substrate, insbesondere biologisch abbaubare Substrate enthalten. Entsprechend geeignete Substrate sind oben ausgeführt. Die Bildung von Kohlenstoffdioxid aus diesen kohlenstoffhaltigen Substraten folgt üblicherweise mikrobiell unter aeroben Bedingungen. In einer Ausführungsform handelt es sich dabei um einen Bioreaktor, der Aggregate aus Stärkeaufweist, zum Beispiel in Form von Sago. Insbesondere ist in einer Ausführungsform das Substrat ein erfindungsgemäßes Substrat mit Cellulose und Stärke. Diese Ausführungsform ist insbesondere vorteilhaft, da sie kostengünstig ist, in Pelletform hergestellt werden kann und kein Phosphat bereitstellt, so dass ein Algenwachstum vermindert wird.

Das heißt, in einer Ausführungsform richtet sich die vorliegende Anmeldung auf einen mikrobiellen Bioreaktor zur Generierung von kohlenstoffhaltigen Verbindungen, insbesondere Kohlenstoffdioxid, und gegebenenfalls natürlicher Freisetzung weiterer Makro- und Mikronährstoffe, für die Versorgung von Unterwasserpflanzen und gegebenenfalls als Nährstoffe für Mikroorganismen zur biologischen Reinigung von Wasser, enthaltend biologisch abbaubare organische Kohlenstoffsubstrate als Nährstoffdepots, insbesondere ausgebildet zur Verwendung in stehenden Gewässern ausgewählt aus Schwimmteichen, Badeteichen und/oder Naturpools oder Aquarien.

Schließlich wird eine Vorrichtung zur Durchführung des erfindungsgemäßen Verfahrens umfassend einen erfindungsgemäßen mikrobiellen Bioreaktor bereitgestellt.

In einer Ausführungsform weist eine Vorrichtung zur Durchführung des erfindungsgemäßen Verfahrens Depotröhren zur Aufnahme der biologisch abbaubaren, wasserunlöslichen organischen Kohlenstoffsubstrate, die gegebenenfalls weitere Makro- und Mikronährstoffe enthalten, als Nährstoffdepots auf.

Darüber hinaus kann die erfindungsgemäße Vorrichtung Biofilter aufweisen, die biodegradierbare, wasserunlösliche Kohlenstoffsubstrate, wie mikrobielle abbaubare Biopolymere, Stearin, Stärke oder Cellulose etc., als Substrate für mikrobielles Wachstum in Biofiltern zur Denitrifizierung und/oder Phosphatbindung, enthalten. Gleichzeitig oder getrennt davon können diese biodegradierbaren, wasserunlöslichen Kohlenstoffsubstrate in Biofiltern als Depot für von Mikroorganismen benötigte weitere Nährstoffe eingesetzt werden.

Das erfindungsgemäße Verfahren ist insbesondere geeignet zur Verwendung zur Versorgung von Unterwasserpflanzen und von, für die biologische Klärung des Teichwassers notwendigen, Mikroorganismen mit Kohlenstoff und anderen Makro-und Mikronährstoffen in stehenden Gewässern, wie künstlichen Gewässern ausgewählt aus Schwimmteichen, Badeteichen und/oder Naturpools oder Aquarien. Entsprechend finden die erfindungsgemäßen Vorrichtungen zur Versorgung von Unterwasserpflanzen und von, für die biologische Klärung des Teich/Aquarienwassers notwendigen, Mikroorganismen mit Kohlenstoff und anderen Makro-und Mikronährstoffen in stehenden Gewässern ausgewählt aus Schwimmteichen, Badeteichen, Naturpools und/oder Aquarien Anwendung.

Mögliche Ausführungsformen der Erfindung werden nachfolgend anhand der Zeichnungen näher erläutert. Hierbei zeigen die Abbildungen Folgendes:

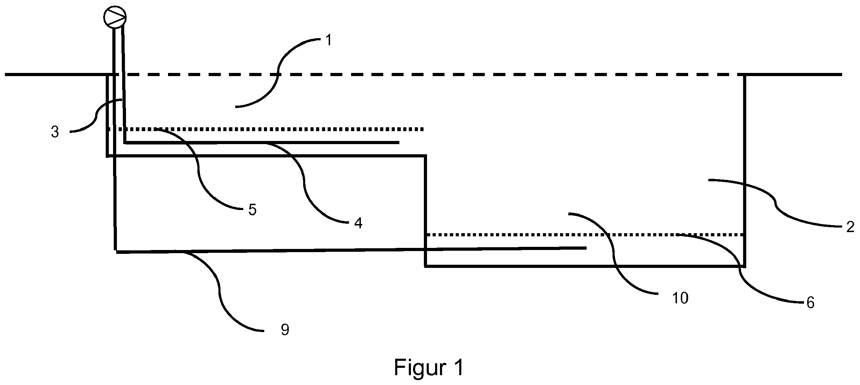

Figur 1 zeigt im Querschnitt eine erfindungsgemäße Vorrichtung und das erfindungsgemäße Verfahren in einem Gewässer, das einen bepflanzten Sumpf-/Flachwasserbereich 1, einen bepflanzten Tiefwasserbereich 2 und einen unbepflanzten Schwimmbereich 9 aufweist. Diese Bereiche können dabei zumindest partiell räumlich getrennt sein, 8a, 8b. Dabei liegt eine Pumpe 3 vor, die das Durchströmwasser durch eine Leitung 4, 7 aus dem Bodensubstrat 5 des Flachwasserbereiches 2 in das Bodensubstrat des bepflanzten Tiefwasserbereiches 6 oder direkt in den Wasserkörper 2 des bepflanzten Tiefwasserbereiches (nicht gezeigt) fördert. In das Bodensubstrat des Sumpf-/Flachwasserbereiches 5 und/oder des bepflanzten Tiefwasserbereiches 6 wurden wasserunlösliche biologisch abbaubare Kohlenstoffsubstrate in Granulatform platziert, 10a, 10b, welche insbesondere in den ersten Jahren, bevor ausreichend natürliche Kohlenstoff-haltige Sedimente eingelagert worden sind, über mikrobiologische Oxidation das Durchströmwasser mit Kohlendioxid anreichern. Gemäß dem erfindungsgemäßen Verfahren beziehungsweise der erfindungsgemäßen Vorrichtung werden langsam abbaubare biologisch degradierbare Kohlenstoffsubstrate, wie Biopolymere, Stearin oder Cellulose/Holzpellets in die Bodensubstratschichten 5 und/oder 6 eingebracht. Das Einbringen erfolgt beim Bau direkt in/unter die Bodensubstratschicht. Über die Leitung 7 wird Durchströmwasser durch die Bodensubstratschicht 6 im Tiefwasser geführt, welches mit mikrobiell aus dem eingebrachten Polymeren freigesetzten Kohlenstoffdioxid, sowie mit freigesetzten weiteren Makro- und Mikronährstoffen angereichert wird. Alternative kann das im Bodensubstrat 5 des Flachwasserbereiches 1 mit Kohlendioxid angereicherte Durchströmwasser auch direkt in den Wasserkörper des bepflanzten Tiefwasserbereiches 2 eingeleitet werden (nicht gezeigt).

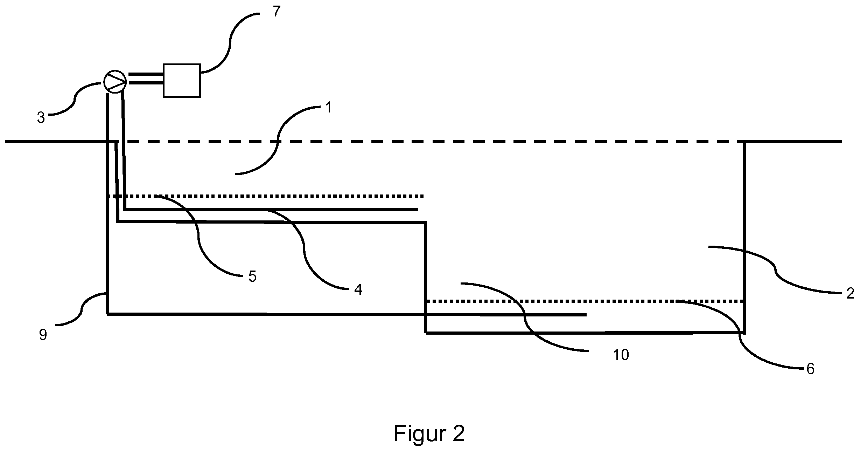

Figur 2 zeigt eine Variante des in Figur 1 dargestellten Verfahrens. Im Bodensubstrat 5 des Sumpf-/Flachwasserbereiches und/oder des bepflanzten Tiefwasserbereiches 6 werden großlumige perforierte Depotleitungen platziert, 11a, 11b, in die wasserunlösliche biologisch abbaubare Kohlenstoffsubstrate in Granulatform, 10a, 10b, eingespült werden können. Dieses erlaubt bedarfsgerechtes Nachfüllen nach Verbrauch der wasserunlöslichen biologisch abbaubaren Kohlenstoffsubstrate.

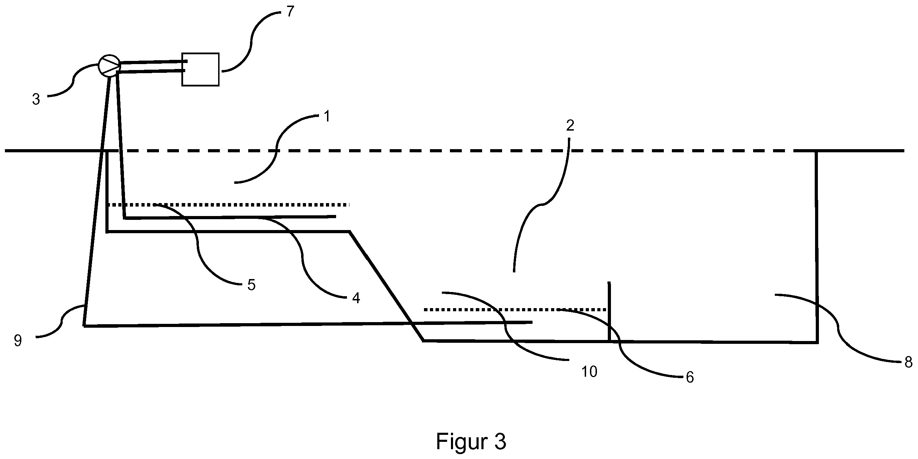

Figur 3 zeigt im Querschnitt ein erfindungsgemäßes Verfahren beziehungsweise eine erfindungsgemäße Vorrichtung in einem Gewässer, das einen bepflanzten Sumpf- oder Flachwasserbereich 1, einen bepflanzten Tiefwasserbereich 2 und einen unbepflanzten Schwimmbereich 9 aufweist, wobei diese partiell oder vollständig räumlich getrennt sein können. Dabei liegt eine Pumpe 3 vor, die das Durchströmwasser durch eine Leitung 4 aus dem Bodensubstrat 5 des Flachwasserbereichs 1 fördert. Eine zweite Pumpe 12 fördert Wasser aus dem bepflanzten Tiefwasserbereich 2 oder dem Tiefwasserschwimmbereich 9 in einem erfindungsgemäßen Bioreaktor 13 zur mikrobiellen Umsetzung von Kohlenstoffsubstraten. Nach Vermischen mit Durchströmwasser 7 aus dem Bodensubstrat des Sumpf-/Flachwasserbereichs 2 wird dieses Wasser in den Bodensubstratbereich 6 des Tiefwasserbereichs 2 mit submersen Pflanzen geführt. Nicht dargestellt ist, dass das Durchströmwasser beziehungsweise Wasser aus dem Bioreaktor optional in den Wasserkörper des bepflanzten Tiefwasserbereiches gefördert werden kann. Bei dem mikrobiellen Bioreaktor kann es sich um einen gerührten Bioreaktor handeln, wie er prinzipiell industriell eingesetzt wird.

### Beispiel 1

### Herstellungsverfahren für Nährstoffdepotaggregate enthaltend Stärke und Cellulose:

Zur Herstellung einer erfindungsgemäßen Kohlenstoffquelle in Form eines Nährstoffdepots werden folgende Schritte durchgeführt.

Stärkepulver (z.B. Kartoffelstärke oder Maisstärke) wird als Suspension in kaltem Wasser bereitgestellt. Optional können darin auch weiter Makro und Mikronährstoffe gelöst werden. Die Stärkesuspension wird auf ca. 65° C erwärmt, um die Stärke in dem Wasser zu lösen. Hierbei wird ein zäher Brei erhalten. Zu diesem Stärkebrei werden Cellulosefasern gegeben (hergestellt z.B. aus Baumwolle, Gras, Flachs, Hanf oder Holz hergestellt) und unter Rühren vermischt. Aus diesem Stärke-Cellulose-Gemisch werden z.B. Pellets z. B. durch Extrusion geformt. Anschließend werden die Pellets getrocknet.

Diese erfindungsgemäßen Pellets können sowohl im Biofilter vorliegen, hier bevorzugt an der Einströmseite vor nachfolgendem folgenden Filtersubstrat z.B. in Form von Kalkgestein als auch als Depot direkt in das Bodensubstrat oder in Depotröhren oder Depotbehältnisse eingebracht werden, oder auch in mikrobiellen Bioreaktoren für die Bildung von CO₂ im Durchströmwasser eingesetzt werden.

### Bezugszeichen

1 Flachwasserbereich
2 Bepflanzter Tiefwasserbereich
3 Pumpe
4 Leitung
5 Bodensubstrat Flachwasser-/Sumpfbereich
6 Bodensubstrat bepflanzter Tiefwasserbereich
7 Leitung
8a, 8b... zumindest partielle Abtrennung
9 Schwimmbereich
10a,b... wasserunlösliches biologisch abbaubares Kohlenstoffsubstrat in Granulatform
11a,b... Depotleitungen
12 zweite Pumpe
13 Bioreaktor

## Patentansprüche

1. Verfahren zur Versorgung von Wasserpflanzen und im Wasser vorhandener Mikroorganismen, insbesondere solche zur biologischen Reinigung des Wassers, in einem stehenden Gewässer mit kohlenstoffhaltigen Verbindungen, wie Kohlendioxid, und gegebenenfalls weiteren Makro- und Mikronährstoffen, wobei biologisch abbaubare, wasserunlösliche organische Kohlenstoffsubstrate als Nährstoffdepot bereitgestellt werden.

2. Verfahren nach Anspruch 1, wobei die biologisch abbaubaren, wasserunlöslichen organischen Kohlenstoffsubstrate mindestens zwei Komponenten aufweisen, eine erste Komponente einer schnell abbaubaren Kohlenstoffquelle, welche gleichzeitig als Kleber und Dichtmittel fungiert, und einer zweiten strukturbildenden Komponente einer langsam abbaubaren Kohlenstoffquelle.

3. Verfahren nach Anspruch 2, wobei die schnell abbaubare Kohlenstoffquelle Stärke ist und die langsam abbaubare Kohlenstoffquelle Cellulose ist.

4. Verfahren nach Anspruch 1, **dadurch gekennzeichnet, dass** die biologisch abbaubaren, wasserunlöslichen organischen Kohlenstoffsubstrate als wasserunlösliche biologisch abbaubare Kohlenstoffquellen, in Form von Polymeren, insbesondere Biopolymere und/oder Fettsäuren/Wachse und/oder Polysaccharide, oder in Form komplexer natürlicher Substrate, wie in Form von Holzpellets, Hanffasern, Flachsfasern oder Baumwollfasern eingebracht werden.

5. Verfahren nach einem der vorliegenden Ansprüche, wobei die biologisch abbaubaren, wasserunlöslichen organischen Kohlenstoffsubstrate, insbesondere in Form von Biopolymeren, Fettsäuren/Wachsen, Polysaccharide und/oder komplexen natürlichen Substraten mit in die Substrate inkorporierten zusätzlichen Makro- und Mikronährstoffen vorliegen.

6. Verfahren nach einem der vorherigen Ansprüche, **dadurch gekennzeichnet, dass** Durchströmwasser durch wenigstens ein Rohr, insbesondere ein Drainagerohr, und oder ein Schlauch, durch das Nährstoffdepot aufweisende Bodensubstrat (5,6), zum Beispiel des Sumpf/Flachwasserbereiches (1), und/oder des bepflanzten Tiefwasserbereichs (2) in den Wasserkörper des bepflanzten Tiefwasserbereiches (2) gefördert, insbesondere gepumpt oder gesaugt wird.

7. Verfahren nach einem der vorherigen Ansprüche, **dadurch gekennzeichnet, dass** die biologisch abbaubaren, wasserunlöslichen Kohlenstoffquellen, insbesondere Biopolymere, Fettsäuren/Wachse, Polysaccharide und/oder komplexe natürlichen Substrate in im Bodensubstrat des Sumpf/Flachwasserbereiches(5), und/oder des bepflanzten Tiefwasserbereichs (6) platzierte, perforierte Depotrohre eingebracht werden, die eine spätere Nachfüllung über Einspülen neuer Kohlenstoffquellen erlauben.

8. Verfahren nach einem der vorherigen Ansprüche, **dadurch gekennzeichnet, dass** das Durchströmwasser, insbesondere das Durchströmwasser zugeführt zum Tiefwasserbereich, in einem Bioreaktor (13) durch mikrobiellen Abbau von biologisch abbaubaren, wasserunlöslichen organischen Kohlenstoffsubstraten, insbesondere Biopolymere, Stearin, Cellulose, insbesondere Stärke z.B. in Form von Sago oder Kartoffelstärke, mit Kohlendioxid angereichert wird.

9. Verwendung von biologisch abbaubaren, wasserunlöslichen organischen Kohlenstoffsubstraten als Nährstoffdepots zur Versorgung von Mikroorganismen in Biofiltern, insbesondere zur Denitrifizierung und Phosphatbindung/-elimination, gegebenenfalls vorliegend in Aggregatform oder in Form spezieller Filtersubstrate mit großer Oberfläche, und gegebenenfalls angereichert mit Makro- und Mikronährstoffen, in stehenden Gewässern, insbesondere ausgewählt aus Schwimmteichen, Badeteichen, Naturpools und/oder Aquarien.

10. Verwendung von biologisch abbaubaren organischen Kohlenstoffsubstraten in Form von Nährstoffdepots gegebenenfalls in Aggregatform mit weiteren Makro- und Mikronährstoffen zur Versorgung von Wasserpflanzen mit kohlenstoffhaltigen Verbindungen, insbesondere Kohlenstoffdioxid, und als Nährstoff für Mikroorganismen zur biologischen Reinigung von Wasser in stehenden Gewässern insbesondere ausgewählt aus Schwimmteichen, Badeteichen, Naturpools, und/oder Aquarien.

11. Mikrobieller Bioreaktor (13) zur Generierung von kohlenstoffhaltigen Verbindungen, insbesondere Kohlenstoffdioxid, und gegebenenfalls natürlicher Freisetzung weiterer Makro- und Mikronährstoffe, für die Versorgung von Unterwasserpflanzen und gegebenenfalls als Nährstoff für Mikroorganismen zur biologischen Reinigung von Wasser, enthaltend biologisch abbaubare, wasserunlösliche organische Kohlenstoffsubstrate als Nährstoffdepots, insbesondere ausgebildet zur Verwendung in stehenden Gewässern ausgewählt aus Schwimmteichen, Badeteichen, Naturpools und/oder Aquarien.

12. Vorrichtung zur Durchführung eines Verfahrens nach einem der Ansprüche 1 bis 6 umfassend einen mikrobiellen Bioreaktor nach Anspruch 9.

13. Vorrichtung zur Durchführung eines Verfahrens nach einem der Ansprüche 1 bis 7 umfassend Depotrohre (11a,b) zur Aufnahme der biologisch abbaubaren, wasserunlöslichen organischen Kohlenstoffsubstrate, die gegebenenfalls weitere Makro-und Mikronährstoffe aufweisen, als Nährstoffdepots enthalten.

14. Verwendung von biologisch abbaubaren wasserunlöslichen organischen Kohlenstoffsubstraten nach einem der Ansprüche 1 bis 7 zur Phosphatbindung und Elimination im Stillgewässer.
